# EUROPÄISCHE PATENTSCHRIFT

(11) **EP 2 772 654 B1**
(45) Veröffentlichungstag und Bekanntmachung des Hinweises auf die Patenterteilung: **12.06.2019**
(21) Anmeldenummer: 13164129.2
(22) Anmeldetag: 17.04.2013
(51) Int. Cl.: F16C 3/20, F02B 75/06, F16F 15/26

(54) **Kurbelwelle mit als Unwucht dienendem Ausgleichsgewicht und Verfahren zur Herstellung der Kurbelwelle**
Crankshaft with counterweight and method for the manufacture of the crankshaft
Vilebrequin doté d'un poids d'équilibrage et procédé de fabrication du vilebrequin

(30) Priorität: 01.03.2013 DE 102013203560; 01.03.2013 DE 102013203562
(43) Veröffentlichungstag der Anmeldung: 03.09.2014
(73) Patentinhaber: Ford Global Technologies, LLC, Dearborn, MI 48126 (US)
(72) Erfinder: Bonse, Jörg, 52146 Würselen (DE); Lach, Rainer, 52146 Wuerselen (DE)
(74) Vertreter: Illing, Rolf

(56) Entgegenhaltungen:
- DE-A1- 19 745 586
- DE-A1-102009 054 405
- US-A- 4 517 933

## Beschreibung

Die Erfindung betrifft einen Kurbeltrieb umfassend eine Kurbelwelle für eine Brennkraftmaschine mit mindestens einem Zylinder, bei dem
- die in einem Kurbelgehäuse gelagerte Kurbelwelle für jeden Zylinder eine dazugehörige Kurbelwellenkröpfung aufweist, wobei die Kurbelwellenkröpfungen entlang der Längsachse der Kurbelwelle beabstandet zueinander angeordnet sind, und erfindungsgemäß
- mindestens ein als Unwucht dienendes Ausgleichsgewicht zum Zwecke eines Massenausgleichs auf der gegenüberliegenden Seite mindestens einer Kurbelwellenkröpfung auf der Kurbelwelle angeordnet ist.

Des Weiteren betrifft die Erfindung ein Verfahren zum Herstellen der Kurbelwelle eines derartigen Kurbeltriebs.

DE 197 45 586 A1 offenbart die Merkmale des Oberbegriffs von Anspruch 1.

Ein Kurbeltrieb umfasst eine Kurbelwelle, Kolben, Kolbenbolzen und Pleuelstangen, die über den im kleinen Pleuelauge angeordneten Kolbenbolzen mit dem dazugehörigen Kolben gelenkig verbunden und im großen Pleuelauge auf einem Kurbelzapfen der Kurbelwelle drehbar gelagert sind.

Der Kolben dient dabei der Übertragung der durch die Verbrennung generierten Gaskräfte auf die Kurbelwelle. Die Gaskräfte, mit denen der Kolben beaufschlagt wird, werden auf diese Weise über den Kolbenbolzen auf die Pleuelstange und von dieser auf die Kurbelwelle übertragen.

Durch die beschriebene Anordnung von Kolben, Kolbenbolzen, Pleuelstange und Kurbelwelle wird die ausschließlich oszillierende Bewegung des Kolbens in eine rotatorische Bewegung der Kurbelwelle transformiert. Die Pleuelstange bewegt sich anteilig rotatorisch und anteilig oszillierend in Richtung Zylinderrohrlängsachse.

Die Gaskräfte drücken den Kolben in Richtung Zylinderrohrlängsachse nach unten, wobei ausgehend vom oberen Totpunkt (OT) dem Kolben durch die Gaskräfte eine beschleunigte Bewegung aufgezwungen wird. Der Kolben, der mit seiner nach unten gerichteten Bewegung versucht, den Gaskräften auszuweichen, muss bei dieser abwärts gerichteten Bewegung die mit ihm gelenkig verbundene Pleuelstange mitnehmen. Hierzu leitet der Kolben die auf ihn wirkenden Gaskräfte über den Kolbenbolzen auf die Pleuelstange und versucht diese nach unten zu beschleunigen. Nähert sich der Kolben dem unteren Totpunkt (UT) wird er zusammen mit den mit ihm verbundenen Bauteilen, insbesondere der Pleuelstange, verzögert, um dann im unteren Totpunkt (UT) eine Bewegungsumkehr zu vollziehen.

Die Brennkraftmaschine, d. h. der Motor, und die dazugehörigen Nebenaggregate sind schwingungsfähige Systeme, deren Schwingungsverhalten beeinflusst werden kann. Die relevantesten schwingungsfähige Systeme bzw. Bauteile mit Stoß- und Kraftanregung sind das Kurbelgehäuse, der Zylinderblock, der Zylinderkopf, der Ventiltrieb und der Kurbeltrieb, der auch Gegenstand der vorliegenden Erfindung ist. Diese Bauteile sind den Massen- und Gaskräften ausgesetzt.

Die Kurbelwelle wird durch die sich zeitlich verändernden Drehkräfte, welche über die an den einzelnen Kurbelzapfen angelenkten Pleuelstangen in die Kurbelwelle eingeleitet werden, zu Drehschwingungen angeregt. Diese Drehschwingungen führen sowohl zu Geräuschen durch Körperschallabstrahlung als auch zu Geräuschen durch Körperschalleinleitung in die Karosserie und in die Brennkraftmaschine, wobei auch Vibrationen auftreten können, die den Fahrkomfort nachteilig beeinflussen, beispielsweise Vibrationen des Lenkrades im Fahrgastinnenraum. Bei Anregung der Kurbelwelle im Eigenfrequenzbereich kann es zu hohen Drehschwingungsamplituden kommen, die sogar zum Dauerbruch führen können. Dies zeigt, dass die Schwingungen nicht nur in Zusammenhang mit einem Geräuschdesign von Interesse sind, sondern vielmehr auch im Hinblick auf die Festigkeit der Bauteile.

Die Drehschwingungen der Kurbelwelle werden ungewollt über den Steuertrieb bzw. Nockenwellenantrieb auf die Nockenwelle übertragen, wobei die Nockenwelle selbst auch ein schwingungsfähiges System darstellt und weitere Systeme, insbesondere den Ventiltrieb, zu Schwingungen anregen kann. Die Einleitung von Schwingungen in andere Nebenaggregate via von der Kurbelwelle angetriebenen Zugmitteltrieb ist ebenfalls möglich. Zudem werden die Schwingungen der Kurbelwelle in den Antriebsstrang eingeleitet, über welchen eine Weiterleitung bis hin zu den Reifen eines Fahrzeuges erfolgen kann.

Der Drehkraftverlauf an einer Kurbelwellenkröpfung einer Viertaktbrennkraftmaschine ist periodisch, wobei sich die Periode über zwei Umdrehungen der Kurbelwelle erstreckt. Üblicherweise wird der Drehkraftverlauf mittels Fourier-Analyse in seine harmonischen Anteile zerlegt, um Aussagen über die Erregung von Drehschwingungen treffen zu können. Dabei setzt sich der tatsächliche Drehkraftverlauf aus einer konstanten Drehkraft und einer Vielzahl von sich harmonisch verändernden Drehkräften zusammen, die unterschiedliche Drehkraftamplituden und Frequenzen bzw. Schwingzahlen aufweisen. Das Verhältnis der Schwingzahl *nᵢ* jeder Harmonischen zur Drehzahl *n* der Kurbelwelle bzw. des Motors, wird als die Ordnung i der Harmonischen bezeichnet.

Aufgrund der hohen dynamischen Belastung der Kurbelwelle durch die Massen- und Gaskräfte ist man bei der Auslegung der Brennkraftmaschine bemüht, einen möglichst weitgehenden, d. h. optimierten Massenausgleich zu realisieren. Dabei werden unter dem Begriff "Massenausgleich" sämtliche Maßnahmen zusammengefasst, die die Wirkung der Massenkräfte nach außen kompensieren bzw. verringern. Insofern umfasst der Massenausgleich auch den Ausgleich der durch die Massenkräfte hervorgerufenen Momente.

Ein Massenausgleich kann im Einzelfall bereits durch eine gezielte Abstimmung der Kröpfung der Kurbelwelle, der Anzahl und der Anordnung der Zylinder erfolgen.

Ein Sechs-Zylinder-Reihenmotor kann auf diese Weise vollständig ausgeglichen werden. Die sechs Zylinder werden paarweise in der Art zusammengefasst, dass sie mechanisch als Zylinderpaar parallel laufen. So werden der erste und sechste Zylinder, der zweite und fünfte Zylinder und der dritte und vierte Zylinder zu einem Zylinderpaar zusammengefasst, wobei die Kurbelwellenzapfen bzw. -kröpfungen der drei Zylinderpaare um jeweils 120° KW versetzt auf der Kurbelwelle angeordnet sind. Mechanisch parallel laufend bedeutet, dass die beiden Kolben der zwei mechanisch parallel laufenden Zylinder sich bei demselben °KW (Grad Kurbelwinkel) im oberen Totpunkt (OT) bzw. unteren Totpunkt (UT) befinden.

Bei einem Drei-Zylinder-Reihenmotor lassen sich die Massenkräfte 1. Ordnung und die Massenkräfte 2. Ordnung durch Wahl einer geeigneten Kurbelwellenkröpfung ebenfalls vollständig ausgleichen, nicht aber die Momente, welche durch die Massenkräfte hervorgerufen werden.

Ein vollständiger Massenausgleich ist nicht immer realisierbar, so dass weitere Maßnahmen ergriffen werden müssen, beispielsweise das Anordnen von Gegengewichten auf der Kurbelwelle und/oder die Ausstattung der Brennkraftmaschine mit mindestens einer Ausgleichswelle.

Ausgangspunkt sämtlicher Maßnahmen ist die Überlegung, dass die Kurbelwelle durch die sich zeitlich verändernden Drehkräfte, welche sich aus den Gaskräften und Massenkräften des Kurbeltriebes zusammensetzen, belastet wird. Die Massen des Kurbeltriebes, d. h. die Einzelmassen der Pleuelstange, des Kolbens, des Kolbenbolzens der Kolbenringe und der Kurbelwelle selbst, lassen sich in eine oszillierende Ersatzmasse und eine rotierende Ersatzmasse überführen. Die Massenkraft der rotierenden Ersatzmasse kann in einfacher Weise durch auf der Kurbelwelle angeordnete Gegengewichte in ihrer Außenwirkung ausgeglichen werden.

Aufwendiger gestaltet sich der Ausgleich der durch die oszillierende Ersatzmasse hervorgerufenen Massenkraft, die sich näherungsweise aus einer Massenkraft 1. Ordnung und einer Massenkraft 2. Ordnung zusammensetzt, wobei Kräfte höherer Ordnung vernachlässigbar sind.

Die Massenkräfte jeder Ordnung können nahezu ausgeglichen werden durch die Anordnung von zwei gegensinnig rotierenden mit entsprechenden Gewichten versehenen Wellen, sogenannten Ausgleichswellen. Die Wellen für den Ausgleich der Massenkräfte 1. Ordnung laufen dabei mit Motordrehzahl und die Wellen für den Ausgleich der Massenkräfte 2. Ordnung mit zweifacher Motordrehzahl um. Diese Art des Massenausgleichs ist sehr kostenintensiv, aufwendig und weist neben einem hohen Gewicht auch einen hohen Raumbedarf auf. Im Rahmen des Ausgleichs der Massenkräfte 1. Ordnung kann die Kurbelwelle gleichzeitig als Ausgleichswelle dienen, d. h. eine der beiden Ausgleichswellen bilden, so dass zumindest das Gewicht und der Raumbedarf des Massenausgleichs reduziert wird.

Selbst bei einem vollständigen Ausgleich der Massenkräfte ergeben sich Massenmomente, da die Massenkräfte der einzelnen Zylinder in den Zylindermittelebenen wirken. Diese Massenmomente können im Einzelfall durch mindestens eine mit Gewichten ausgestattete Ausgleichwelle kompensiert werden. Letzteres erhöht wieder den Raumbedarf, die Kosten sowie das Gewicht des gesamten Massenausgleichs.

Bei einem Drei-Zylinder-Reihenmotor lassen sich die durch die Massenkräfte 1. Ordnung hervorgerufenen Momente beispielsweise durch eine einzelne, mit Motordrehzahl gegensinnig zur Kurbelwelle umlaufende Ausgleichswelle, an deren Enden zwei um 180° versetzt, d. h. verdreht, angeordnete und als Unwucht dienende Ausgleichsgewichte vorgesehen sind, kompensieren.

Alternativ lassen sich die durch die Massenkräfte 1. Ordnung hervorgerufenen Momente bei einem Drei-Zylinder-Reihenmotor auch durch zwei als Unwucht dienende und entgegen gesetzt zueinander rotierende Ausgleichsgewichte kompensieren, wobei ein erstes Ausgleichsgewicht gleichsinnig mit der Kurbelwelle umläuft und ein zweites Ausgleichsgewicht gegensinnig zur Kurbelwelle umläuft. Der wesentliche Unterschied zu dem vorher beschriebenen Massenausgleich ist darin zu sehen, dass die beiden als Unwucht dienenden Ausgleichsgewichte entgegengesetzt zueinander rotieren. Folglich sind die beiden Ausgleichsgewichte nicht auf demselben Träger, beispielsweise einer Welle, anzuordnen, sondern auf unterschiedlichen Trägern, die ihnen die Rotationsbewegung in unterschiedlicher Drehrichtung aufprägen. Als Träger für das erste Ausgleichsgewicht kann beispielsweise die Kurbelwelle selbst dienen bzw. ein mit der Kurbelwelle verbundener Körper, beispielsweise ein Schwungrad. Das zweite Ausgleichsgewicht erfordert einen gegensinnig zur Kurbelwelle rotierenden Träger, der auch von der Kurbelwelle selbst angetrieben werden kann.

Wie vorstehend ausführlich dargelegt, erfordern viele Konzepte zum Ausgleich der Massenkräfte und/oder Massenmomente das Anordnen von als Unwucht dienenden Ausgleichsgewichten auf der Kurbelwelle.

Die Massenkraft der rotierenden Ersatzmasse beispielsweise kann durch auf der Kurbelwelle angeordnete Ausgleichsgewichte in ihrer Außenwirkung vollständig ausgeglichen werden. Dabei wird das mindestens eine als Unwucht dienende Ausgleichsgewicht zum Zwecke eines Massenausgleichs auf der gegenüberliegenden Seite der mindestens einen Kurbelwellenkröpfung der Kurbelwelle angeordnet.

Auch Konzepte zum Ausgleich der durch die Massenkräfte 1. Ordnung hervorgerufenen Momente, beispielsweise eines Drei-Zylinder-Reihenmotors, können sich als Unwucht dienenden Ausgleichsgewichten bedienen, die auf der Kurbelwelle angeordnet werden.

Das Anordnen von Ausgleichsgewichten auf der Kurbelwelle in der vorstehend beschriebenen Weise, kann konstruktive Probleme aufwerfen. Durchläuft der Kolben den unteren Totpunkt, befindet sich ein als Unwucht dienendes Ausgleichsgewicht, welches auf der gegenüberliegenden Seite der zum Kolben gehörenden Kurbelwellenkröpfung angeordnet ist, unmittelbar unterhalb des Kolbens, d. h. auf der dem Kolben zugewandten Seite. Eine Berührung zwischen Kolben und Ausgleichsgewicht bei umlaufender Kurbelwelle muss verhindert werden. Üblicherweise haben Ausgleichsgewichte auf der nach außen gewandten Seite eine kreisbogenförmige Gestalt, wobei die in Umfangsrichtung verlaufende Außenseite des Ausgleichsgewichts zur Längsachse der Kurbelwelle einen im Wesentlichen gleichgroßen Abstand R aufweist.

Die beengten Platzverhältnisse im Kurbelgehäuse gestalten die Anordnung einer Ausgleichsmasse häufig schwierig bzw. erfordern die Anordnung einer vergleichsweise großen Ausgleichsmasse, da der wirksame Hebel, nämlich der Abstand des Schwerpunktes der Unwucht von der Längsachse der Kurbelwelle, aufgrund des geringen zur Verfügung stehenden Bauraums vergleichsweise klein, d. h. kurz ist bzw. gewählt werden muss.

Gegebenenfalls muss aufgrund der beengten Platzverhältnisse ein Massenausgleich außerhalb des Kurbelgehäuses vorgesehen werden. Das Vorsehen einer oder gegebenenfalls mehrerer Ausgleichswellen außerhalb des Kurbelgehäuses erhöht nicht nur den Raumbedarf im Motorraum eines Fahrzeuges und die Kosten, sondern auch den Kraftstoffverbrauch. Der erhöhte Kraftstoffverbrauch wird zum einen durch das zusätzliche Gewicht der Ausgleichseinheit verursacht. Zum anderen trägt die Ausgleichseinheit mit ihren rotierenden Wellen und anderen bewegten Bauteilen nicht unwesentlich zur Reibleistung der Brennkraftmaschine bei bzw. zur Erhöhung dieser Reibleistung. Letzterem kommt eine Relevanz insbesondere durch den Umstand zu, dass die Ausgleichseinheit immer und kontinuierlich in Betrieb ist, sobald die Brennkraftmaschine gestartet und betrieben wird.

Im Hinblick auf den Kraftstoffverbrauch sollten aber die Ausgleichsmassen und das gesamte Gewicht des Massenausgleichs grundsätzlich so gering wie möglich sein.

Vor diesem Hintergrund ist es eine Aufgabe der vorliegenden Erfindung, einen Kurbeltrieb gemäß dem Oberbegriff des Anspruchs 1 bereitzustellen, welcher hinsichtlich des Massenausgleichs optimiert ist.

Eine weitere Teilaufgabe der vorliegenden Erfindung besteht darin, ein Verfahren zum Herstellen der Kurbelwelle eines derartigen Kurbeltriebs aufzuzeigen.

Gelöst wird die erste Teilaufgabe durch einen Kurbeltrieb umfassend eine Kurbelwelle für eine Brennkraftmaschine mit mindestens einem Zylinder, bei dem
- die in einem Kurbelgehäuse gelagerte Kurbelwelle für jeden Zylinder eine dazugehörige Kurbelwellenkröpfung aufweist, wobei die Kurbelwellenkröpfungen entlang der Längsachse der Kurbelwelle beabstandet zueinander angeordnet sind, und
- mindestens ein als Unwucht dienendes Ausgleichsgewicht zum Zwecke eines Massenausgleichs auf der gegenüberliegenden Seite mindestens einer Kurbelwellenkröpfung auf der Kurbelwelle angeordnet ist, und
   das dadurch gekennzeichnet ist, dass
- das mindestens eine Ausgleichsgewicht auf der nach außen gewandten Seite eine kreisbogenförmige Gestalt aufweist, deren in Umfangsrichtung verlaufende Außenseite einen gleichgroßen Abstand S aufweist zu einer Bezugsachse, welche parallel und um einen Abstand Δ beabstandet zur Längsachse der Kurbelwelle verläuft, wobei die Bezugsachse ausgehend von der Längsachse der Kurbelwelle auf der vom Ausgleichsgewicht abgewandten Seite angeordnet ist.

Wie bei einem herkömmlichen Kurbeltrieb hat das mindestens eine Ausgleichsgewicht eines erfindungsgemäßen Kurbeltriebs auf der nach außen gewandten Seite eine kreisbogenförmige Gestalt.

Der wesentliche Unterschied des erfindungsgemäßen Kurbeltriebs gegenüber den aus dem Stand der Technik bekannten Kurbeltrieben, ist darin zu sehen, dass die in Umfangsrichtung verlaufende Außenseite eines Ausgleichsgewichts nicht zur Längsachse der Kurbelwelle einen im Wesentlichen gleichgroßen Abstand *R* aufweist, sondern vielmehr einen gleichgroßen Abstand *S* zu einer Bezugsachse hat, welche parallel und beabstandet zur Längsachse der Kurbelwelle verläuft.

Insofern ist der Abstand der Außenseite eines Ausgleichsgewichts zur Längsachse der Kurbelwelle trotz kreisbogenförmiger Gestalt der Außenseite nicht konstant, sondern vergrößert sich ausgehend von der Mitte. Der Schwerpunkt des mindestens einen Ausgleichsgewichts wird dadurch weiter nach außen verschoben, d. h. der Abstand des Schwerpunktes von der Längsachse der Kurbelwelle wird vergrößert, wodurch der wirksame Hebel der Unwuchtmasse zunimmt.

Die Bezugsachse ist erfindungsgemäß ausgehend von der Längsachse der Kurbelwelle auf der vom Ausgleichsgewicht abgewandten Seite angeordnet, so dass gilt: *S* > *R.*

Die Längsachse der Kurbelwelle ist nach wie vor die Drehachse der umlaufenden Kurbelwelle und die Drehachse der mit der Kurbelwelle umlaufenden Ausgleichsgewichte. Insofern wird die Umfangsrichtung von der Drehrichtung der Kurbelwelle vorgegeben, wobei die kreisbogenförmige Gestalt der Außenseite eines Ausgleichsgewichts durch einen in Umfangsrichtung um die Bezugsachse rotierenden Zeiger der Länge *S* beschrieben bzw. abgefahren werden kann.

Die Einführung der vorstehend beschriebenen Bezugsachse zur Definition und geometrischen Beschreibung der kreisbogenförmigen Gestalt der Außenseite eines Ausgleichsgewichts, welche erfindungsgemäß von der Längsachse der Kurbelwelle abweicht, ermöglicht es, den im Kurbelgehäuse begrenzt zur Verfügung stehenden Bauraum effektiver zu nutzen, d. h. bei gleichem Bauraum größere Unwuchtmassen auf der Kurbelwelle anzuordnen bzw. größere wirksame Hebel zu realisieren und damit die für den Massenausgleich erforderliche Unwuchtmasse zu reduzieren. Die erfindungsgemäße Ausgestaltung des mindestens einen Ausgleichsgewichts ermöglicht es nämlich den Abstand des Schwerpunktes der Unwucht von der Längsachse der Kurbelwelle zu vergrößern, d. h. den Hebel der Unwucht vergleichsweise lang zu gestalten. Im Einzelfall kann auf einen Massenausgleich außerhalb des Kurbelgehäuses verzichtet werden.

Während die beengten Platzverhältnisse im Kurbelgehäuse nach dem Stand der Technik dazu führen können, dass der Massenausgleich zumindest teilweise außerhalb des Kurbelgehäuses angeordnet werden muss, kann dies durch die erfindungsgemäße Ausgestaltung des mindestens einen Ausgleichsgewichts vermieden werden.

Der erfindungsgemäße Kurbeltrieb löst somit die erste der Erfindung zugrunde liegende Aufgabe, nämlich einen Kurbeltrieb gemäß dem Oberbegriff des Anspruchs 1 bereitzustellen, welcher hinsichtlich des Massenausgleichs optimiert ist.

Vorteilhaft sind Ausführungsformen des Kurbeltriebs, bei denen jeder zu einem Zylinder gehörende Kolben mittels Pleuelstange mit der Kurbelwelle gelenkig verbunden ist, wobei die Pleuelstange an einem Ende über einen Kolbenbolzen mit dem Kolben gelenkig verbunden ist und an einem anderen Ende auf einem Kurbelzapfen der dazugehörigen Kurbelwellenkröpfung der Kurbelwelle drehbar gelagert ist.

Vorteilhaft sind Ausführungsformen des Kurbeltriebs, bei denen das mindestens eine Ausgleichsgewicht eine hammerförmige Gestalt aufweist.

Weitere vorteilhafte Ausführungsformen des Kurbeltriebs gemäß den Unteransprüchen werden im Folgenden erörtert.

Vorteilhaft sind Ausführungsformen des Kurbeltriebs, bei denen die Längsachse des mindestens einen Kolbens die Längsachse der Kurbelwelle schneidet.

Vorteilhaft sind dabei Ausführungsformen des Kurbeltriebs, bei denen die von den beiden Längsachsen aufgespannte Ebene bei im unteren Totpunkt befindlichen Kolben die Mittelebene des mindestens einen Ausgleichsgewichts bildet.

Vorteilhaft sind in diesem Zusammenhang Ausführungsformen des Kurbeltriebs, bei denen die Bezugsachse in der Ebene liegt, welche die Längsachse des mindestens einen Kolbens und die Längsachse der Kurbelwelle aufspannen.

Vorteilhaft sind auch Ausführungsformen des Kurbeltriebs, bei denen die Längsachse der Kurbelwelle beabstandet zur Längsachse des mindestens einen Kolbens verläuft. Vorliegend weist die Kurbelwelle einen Offset auf. Die Längsachse der Kurbelwelle weist einen Abstand zur Längsachse des mindestens einen Kolbens auf, d. h. ist in Bezug zum Kolben außermittig angeordnet.

Vorteilhaft sind in diesem Zusammenhang Ausführungsformen des Kurbeltriebs, bei denen eine durch die Längsachse der Kurbelwelle und parallel zur Längsachse des mindestens einen Kolbens verlaufende Ebene bei im unteren Totpunkt befindlichen Kolben die Mittelebene des mindestens einen Ausgleichsgewichts bildet.

Vorteilhaft sind dabei auch Ausführungsformen des Kurbeltriebs, bei denen die Bezugsachse in der Ebene liegt, welche durch die Längsachse der Kurbelwelle und parallel zur Längsachse des mindestens einen Kolbens verläuft. Vorliegend weist die Bezugsachse von der Ebene, welche durch die Längsachse des mindestens einen Kolbens und parallel zur Längsachse der Kurbelwelle verläuft, einen horizontalen Abstand auf, der dem Offset der Kurbelwelle entspricht.

Vorteilhaft sind aber auch Ausführungsformen des Kurbeltriebs, bei denen die Bezugsachse in der Ebene liegt, welche durch die Längsachse des mindestens einen Kolbens und parallel zur Längsachse der Kurbelwelle verläuft. Vorliegend weist die Bezugsachse von der Ebene, welche durch die Längsachse der Kurbelwelle und parallel zur Längsachse des mindestens einen Kolbens verläuft, einen horizontalen Abstand Δ*h* auf, der dem Offset der Kurbelwelle entgegen gerichtet ist und gleichgroß ist.

Der horizontale Abstand Δ*h* steht senkrecht auf den vorstehend definierten Ebenen. Im Gegensatz zu diesem horizontalen Abstand Δ*h* handelt es sich bei einen vertikalen Abstand der Bezugsachse zur Längsachse der Kurbelwelle um einen Abstand bzw. eine Wegstrecke, welche parallel zu den vorstehend definierten Ebenen verläuft, beispielsweise in Richtung der Kolbenlängsachse.

Bei Ausführungsformen des Kurbeltriebs, bei denen die Längsachse der Kurbelwelle einen Offset aufweist, kann es vorteilhaft sein, die Bezugsachse horizontal zur Längsachse der Kurbelwelle zu beabstanden, um den im Kurbelgehäuse zur Verfügung stehenden Bauraum für die Ausbildung des Ausgleichgewichts optimal ausnutzen zu können, wobei der horizontale Abstand Δ*h* in Richtung und Größe nicht dem Offset der Kurbelwelle entsprechen muss, aber entsprechen kann.

Vorteilhaft sind Ausführungsformen des Kurbeltriebs, bei denen die Bezugsachse zwischen der Längsachse der Kurbelwelle und der mindestens einen Kurbelwellenkröpfung liegt. Bei dieser Ausführungsform liegt die Bezugsachse auf der vom mindestens einen Ausgleichsgewicht abgewandten Seite der Kurbelwelle.

Vorteilhaft sind Ausführungsformen des Kurbeltriebs, bei denen für den Abstand Δ gilt: *0* < Δ ≤ *150mm.*

Vorteilhaft sind Ausführungsformen des Kurbeltriebs, bei denen für den Abstand Δ gilt: *0* < Δ ≤ *50mm.*

Vorteilhaft sind Ausführungsformen des Kurbeltriebs, bei denen für den Abstand Δ gilt: *50* ≤ Δ < *100mm.* Die vorstehende Ausführungsform eignet sich insbesondere für Brennkraftmaschinen mit einem Hubraum von 1.6 bis 2.4 Liter.

Vorteilhaft sind auch Ausführungsformen des Kurbeltriebs, bei denen für den Abstand Δ gilt: *100* ≤ Δ ≤ *150mm.* Brennkraftmaschinen für kleinere Nutzfahrzeuge verfügen über größere Kurbelradien, die es gestatten, den Abstand Δ zu vergrößern, d. h. größer zu wählen.

Wie bereits erwähnt, kann der Abstand Δ eine horizontale Komponente aufweisen bzw. ein horizontaler Abstand sein, insbesondere bei Ausführungsformen des Kurbeltriebs, bei denen die Längsachse der Kurbelwelle einen Offset aufweist. Da der horizontale Abstand Δ*h* dabei in einem direkten technischen Zusammenhang mit dem Offset der Kurbelwelle steht, sind Ausführungsformen vorteilhaft, bei denen dieser horizontale Abstand Δ*h* dem Offset entsprechend dimensioniert ist.

Vorteilhaft sind daher Ausführungsformen des Kurbeltriebs, bei denen für den Abstand Δ bzw. Δ*h* gilt: *3* ≤ Δ ≤ *15mm bzw. 3* ≤ Δ*h* ≤ *15mm.*

Vorteilhaft sind insbesondere Ausführungsformen des Kurbeltriebs, bei denen für den Abstand Δ bzw. Δ*h* gilt: *5* ≤ Δ ≤ *12mm bzw. 5* ≤ Δ*h* ≤ *12mm.*

Bei Kurbeltrieben für Brennkraftmaschinen mit drei Zylindern können Ausführungsformen vorteilhaft sein, bei denen die Kurbelwelle drei Kurbelwellenkröpfungen aufweist.

Vorteilhaft sind Ausführungsformen des Kurbeltriebs, bei denen das mindestens eine Ausgleichsgewicht eine Unwuchtmasse zum Ausgleich der Massenkraft der rotierenden Ersatzmasse umfasst.

Vorteilhaft sind auch Ausführungsformen des Kurbeltriebs, bei denen das mindestens eine Ausgleichsgewicht eine Unwuchtmasse zum Ausgleich der durch die Massenkräfte 1. Ordnung hervorgerufenen Momente umfasst.

Wie bereits erwähnt, lassen sich die durch die Massenkräfte 1. Ordnung hervorgerufenen Momente, beispielsweise bei einem Drei-Zylinder-Reihenmotor, aber auch bei einem Fünf-Zylinder-Reihenmotor bzw. einem V-Motor mit sechs oder acht Zylindern, durch zwei als Unwucht dienende und entgegen gesetzt zueinander rotierende Ausgleichsgewichte kompensieren. Ein erstes gleichsinnig mit der Kurbelwelle umlaufendes Ausgleichsgewicht kann dabei auf der Kurbelwelle selbst angeordnet werden, wodurch das Vorsehen einer Ausgleichswelle entfällt. Die Kurbelwelle selbst übernimmt dabei die Funktion einer Ausgleichswelle.

Die zweite der Erfindung zugrunde liegende Teilaufgabe, nämlich ein Verfahren zum Herstellen der Kurbelwelle eines Kurbeltriebs einer zuvor beschriebenen Art aufzuzeigen, wird gelöst durch ein Verfahren, das dadurch gekennzeichnet ist, dass die Kurbelwelle mitsamt dem mindestens einen auf der Kurbelwelle angeordnetem Ausgleichsgewicht geschmiedet wird.

Das bereits für den erfindungsgemäßen Kurbeltrieb Gesagte gilt auch für das erfindungsgemäße Verfahren.

Vorteilhaft sind Verfahrensvarianten, bei denen die Kurbelwelle mitsamt dem mindestens einen auf der Kurbelwelle angeordnetem Ausgleichsgewicht im Gesenk geschmiedet wird. Alternativ kann die Kurbelwelle mitsamt dem mindestens einen auf der Kurbelwelle angeordnetem Ausgleichsgewicht auch gegossen und anschließend nachbearbeitet werden. Eine weitere Variante wäre eine gebaute Kurbelwelle, bei der die Kurbelwelle modular aufgebaut ist.

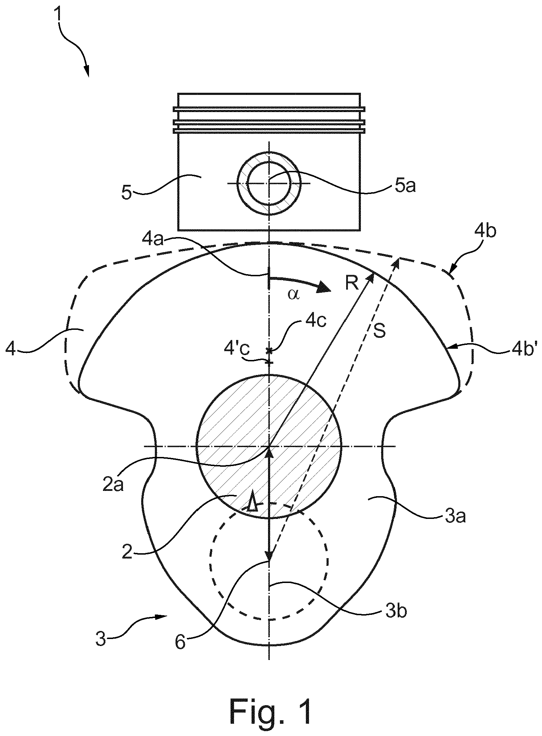

Im Folgenden wird die Erfindung anhand der Figur 1 näher beschrieben. Hierbei zeigt:
- Fig. 1: schematisch Teile einer ersten Ausführungsform des Kurbeltriebs in einer Seitenansicht.

Figur 1 zeigt schematisch Teile einer ersten Ausführungsform des Kurbeltriebs 1 mit im unteren Totpunkt befindlichen Kolben 5 in einer Seitenansicht.

Der Kurbeltrieb 1 umfasst eine Kurbelwelle 2 und einen Kolben 5, der mittels einer - nicht dargestellten - Pleuelstange mit der Kurbelwelle 2 gelenkig verbunden ist, wobei die Pleuelstange im kleinen Pleuelauge über einen Kolbenbolzen mit dem Kolben 5 gelenkig verbunden ist und im großen Pleuelauge auf einem Kurbelzapfen 3b der Kurbelwelle 2 drehbar gelagert ist. Der Kurbelzapfen 3b wird von zwei zueinander beabstandeten Kurbelwagen 3b der dazugehörigen Kurbelwellenkröpfung 3 seitlich begrenzt.

Bei um die Längsachse 2a rotierender Kurbelwelle 2 führt der Kolben 5 eine oszillierende Bewegung entlang seiner Längsachse 5a aus (Drehrichtung α durch Pfeil kenntlich gemacht). Die Längsachse 5a des Kolbens 5 schneidet die Längsachse 2a der Kurbelwelle 2.

Auf der gegenüberliegenden Seite der Kurbelwellenkröpfung 3 ist zum Zwecke eines Massenausgleichs ein als Unwucht dienendes Ausgleichsgewicht 4 auf der Kurbelwelle 2 angeordnet. Die von der Längsachse 5a des Kolbens 5 und der Längsachse 2a der Kurbelwelle 2 aufgespannte Ebene bildet bei im unteren Totpunkt befindlichen Kolben 5 die Mittelebene 4a des Ausgleichsgewichts 4, d. h. vorliegend die Symmetrieebene.

Nach dem Stand der Technik hat das Ausgleichsgewicht 4 eine kreisbogenförmige Gestalt (durchgezogene Linie), bei der die nach außen gewandte Seite, d. h. die in Umfangsrichtung verlaufende Außenseite 4b', zur Längsachse 2a der Kurbelwelle 2 einen über den Drehwinkel α gleichgroßen Abstand R aufweist.

Das erfindungsgemäße Ausgleichsgewicht 4 hat auch eine kreisbogenförmige Gestalt (gestrichelte Linie), bei der die nach außen gewandte Seite, d. h. die in Umfangsrichtung verlaufende Außenseite 4b, einen gleichgroßen Abstand S aufweist zu einer Bezugsachse 6, welche parallel und um einen Abstand Δ beabstandet zur Längsachse 2a der Kurbelwelle 2 verläuft. Die Bezugsachse 6 liegt vorliegend in der Mittelebene 4a zwischen der Längsachse 2a der Kurbelwelle 2 und der Kurbelwellenkröpfung 3. D. h. die Bezugsachse 6 liegt auf der vom Ausgleichsgewicht 4 abgewandten Seite der Kurbelwelle 2.

Bei der in Figur 1 dargestellten Ausführungsform nimmt der Abstand der Außenseite 4b zur Längsachse 2a der Kurbelwelle 2 ausgehend von der Mittelebene 4a zu beiden Seiten hin in gleicher Weise zu. Das Ausgleichsgewicht 4 erhält dadurch eine hammerförmige Gestalt, wobei der Schwerpunkt 4c des Ausgleichsgewichts 4 weiter nach außen wandert, im Vergleich zu einem Schwerpunkt 4c'eines herkömmlich gestalteten Ausgleichsgewichts.

Dadurch, dass sich der Abstand des Schwerpunktes 4c von der Längsachse 2a der Kurbelwelle 2 vergrößert, nimmt der wirksame Hebel der Unwuchtmasse zu.

### Bezugszeichen

- 1: Kurbeltrieb
- 2: Kurbelwelle
- 2a: Längsachse der Kurbelwelle, Drehachse
- 3: Kurbelwellenkröpfung
- 3a: Kurbelwange
- 3b: Kurbelzapfen
- 4: Ausgleichsgewicht, Unwuchtmasse
- 4a: Mittelebene
- 4b: Außenseite des Ausgleichsgewichts
- 4b': Außenseite eines Ausgleichsgewichts nach dem Stand der Technik
- 4c: Schwerpunkt des Ausgleichsgewicht
- 4c': Schwerpunkt eines Ausgleichsgewichts nach dem Stand der Technik
- 5: Kolben
- 5a: Längsachse des Kolbens
- 6: Bezugsachse

- α: Drehwinkel
- Δ: Abstand der Bezugsachse zur Längsachse der Kurbelwelle
- Δ*h*: horizontaler Abstand der Bezugsachse zur Längsachse der Kurbelwelle
- *R*: Abstand der Außenseite des Ausgleichsgewichts zur Längsachse der Kurbelwelle
- *S*: Abstand der Außenseite des Ausgleichsgewichts zur Bezugsachse
- *°KW*: Grad Kurbelwellenwinkel, Kurbelwinkel

## Patentansprüche

1. Kurbeltrieb (1) umfassend eine Kurbelwelle (2) für eine Brennkraftmaschine mit mindestens einem Zylinder, bei dem
- die in einem Kurbelgehäuse gelagerte Kurbelwelle (2) für jeden Zylinder eine dazugehörige Kurbelwellenkröpfung (3) aufweist, wobei die Kurbelwellenkröpfungen (3) entlang der Längsachse (2a) der Kurbelwelle (2) beabstandet zueinander angeordnet sind, und **dadurch gekennzeichnet, dass**
- mindestens ein als Unwucht dienendes Ausgleichsgewicht (4) zum Zwecke eines Massenausgleichs auf der gegenüberliegenden Seite mindestens einer Kurbelwellenkröpfung (3) auf der Kurbelwelle (2) angeordnet ist,
- das mindestens eine Ausgleichsgewicht (4) auf der nach außen gewandten Seite eine kreisbogenförmige Gestalt aufweist, deren in Umfangsrichtung verlaufende Außenseite (4b) einen gleichgroßen Abstand S aufweist zu einer Bezugsachse (6), welche parallel und um einen Abstand Δ beabstandet zur Längsachse (2a) der Kurbelwelle (2) verläuft, wobei die Bezugsachse (6) ausgehend von der Längsachse (2a) der Kurbelwelle (2) auf der vom Ausgleichsgewicht (4) abgewandten Seite angeordnet ist.

2. Kurbeltrieb (1) nach Anspruch 1, **dadurch gekennzeichnet, dass** jeder zu einem Zylinder gehörende Kolben (5) mittels Pleuelstange mit der Kurbelwelle (2) gelenkig verbunden ist, wobei die Pleuelstange an einem Ende über einen Kolbenbolzen mit dem Kolben (5) gelenkig verbunden ist und an einem anderen Ende auf einem Kurbelzapfen (3b) der dazugehörigen Kurbelwellenkröpfung (3) der Kurbelwelle (2) drehbar gelagert ist.

3. Kurbeltrieb (1) nach Anspruch 2, **dadurch gekennzeichnet, dass** die Längsachse (5a) des mindestens einen Kolbens (5) die Längsachse (2a) der Kurbelwelle (2) schneidet.

4. Kurbeltrieb (1) nach Anspruch 3, **dadurch gekennzeichnet, dass** die von den beiden Längsachsen (2a, 5a) aufgespannte Ebene bei im unteren Totpunkt befindlichen Kolben (5) die Mittelebene (4a) des mindestens einen Ausgleichsgewichts (4) bildet.

5. Kurbeltrieb (1) nach Anspruch 3 oder 4, **dadurch gekennzeichnet, dass** die Bezugsachse (6) in der Ebene liegt, welche die Längsachse (5a) des mindestens einen Kolbens (5) und die Längsachse (2a) der Kurbelwelle (2) aufspannen.

6. Kurbeltrieb (1) nach Anspruch 2, **dadurch gekennzeichnet, dass** die Längsachse (2a) der Kurbelwelle (2) beabstandet zur Längsachse (5a) des mindestens einen Kolbens (5) verläuft.

7. Kurbeltrieb (1) nach Anspruch 6, **dadurch gekennzeichnet, dass** eine durch die Längsachse (2a) der Kurbelwelle (2) und parallel zur Längsachse (5a) des mindestens einen Kolbens (5) verlaufende Ebene bei im unteren Totpunkt befindlichen Kolben (5) die Mittelebene (4a) des mindestens einen Ausgleichsgewichts (4) bildet.

8. Kurbeltrieb (1) nach Anspruch 6 oder 7, **dadurch gekennzeichnet, dass** die Bezugsachse (6) in der Ebene liegt, welche durch die Längsachse (2a) der Kurbelwelle (2) und parallel zur Längsachse (5a) des mindestens einen Kolbens (5) verläuft.

9. Kurbeltrieb (1) nach einem der vorherigen Ansprüche, **dadurch gekennzeichnet, dass** die Bezugsachse (6) zwischen der Längsachse (2a) der Kurbelwelle (2) und der mindestens einen Kurbelwellenkröpfung (3) liegt.

10. Kurbeltrieb (1) nach einem der vorherigen Ansprüche, **dadurch gekennzeichnet, dass** für den Abstand Δ gilt: *0* < Δ ≤ *150mm.*

11. Kurbeltrieb (1) nach einem der vorherigen Ansprüche, **dadurch gekennzeichnet, dass** für den Abstand Δ gilt: *0* < Δ ≤ *50mm.*

12. Kurbeltrieb (1) nach einem der vorherigen Ansprüche, **dadurch gekennzeichnet, dass** für den Abstand Δ gilt: *50* ≤ Δ ≤ *100mm.*

13. Kurbeltrieb (1) nach einem der vorherigen Ansprüche, **dadurch gekennzeichnet, dass** für den Abstand Δ gilt: *100* ≤ Δ ≤ *150mm.*

14. Kurbeltrieb (1) nach einem der vorherigen Ansprüche, **dadurch gekennzeichnet, dass** für den Abstand Δ gilt: *3* ≤ Δ ≤ *15mm.*

15. Kurbeltrieb (1) nach einem der vorherigen Ansprüche, **dadurch gekennzeichnet, dass** für den Abstand Δ gilt: *5* ≤ Δ ≤ *12mm.*

16. Verfahren zum Herstellen der Kurbelwelle (2) eines Kurbeltriebs (1) nach einem der vorherigen Ansprüche, **dadurch gekennzeichnet, dass** die Kurbelwelle (2) mitsamt dem mindestens einen auf der Kurbelwelle (2) angeordnetem Ausgleichsgewicht (4) geschmiedet wird.

## Claims

1. Crank drive (1) comprising a crankshaft (2) for an internal combustion engine with at least one cylinder, in which
- the crankshaft (2) mounted in the crankcase has an associated crankshaft throw (3) for each cylinder, **characterized in that** the crankshaft throws (3) are arranged spaced apart along the longitudinal axis (2a) of the crankshaft (2), and **characterized in that**
- at least one compensation weight (4) serving as imbalance is arranged on the crankshaft (2) on the side opposite at least one crankshaft throw (3), for the purpose of a mass compensation,
- the at least one compensation weight (4) has an arcuate form on the outward-facing side, the outside (4b) of which running in the peripheral direction has a constant distance S from a reference axis (6) which runs parallel to and spaced by a distance Δ from the longitudinal axis (2a) of the crankshaft (2), **characterized in that** the reference axis (6) is arranged on the side facing away from the compensation weight (4), starting from the longitudinal axis (2a) of the crankshaft (2).

2. Crank drive (1) according to Claim 1, **characterized in that** each piston (5) belonging to a cylinder is connected pivotingly to the crankshaft (2) via a connecting rod, **characterized in that** the connecting rod at one end is connected pivotingly to the piston (5) via a piston pin and at another end is mounted rotatably on a crank journal (3b) of the associated crankshaft throw (3) of the crankshaft (2).

3. Crank drive (1) according to Claim 2, **characterized in that** the longitudinal axis (5a) of the at least one piston (5) intersects the longitudinal axis (2a) of the crankshaft (2).

4. Crank drive (1) according to Claim 3, **characterized in that** when the piston (5) is at bottom dead center, the plane spanned by the two longitudinal axes (2a, 5a) forms the center plane (4a) of the at least one compensation weight (4).

5. Crank drive (1) according to Claim 3 or 4, **characterized in that** the reference axis (6) lies in the plane spanned by the longitudinal axis (5a) of the at least one piston (5) and the longitudinal axis (2a) of the crankshaft (2).

6. Crank drive (1) according to Claim 2, **characterized in that** the longitudinal axis (2a) of the crankshaft (2) runs spaced from the longitudinal axis (5a) of the at least one piston (5).

7. Crank drive (1) according to Claim 6, **characterized in that** when the piston (5) is at bottom dead center, a plane running through the longitudinal axis (2a) of the crankshaft (2) and parallel to the longitudinal axis (5a) of the at least one piston (5) forms the center plane (4a) of the at least one compensation weight (4).

8. Crank drive (1) according to Claim 6 or 7, **characterized in that** the reference axis (6) lies in the plane which runs through the longitudinal axis (2a) of the crankshaft (2) and parallel to the longitudinal axis (5a) of the at least one piston (5).

9. Crank drive (1) according to any of the preceding claims, **characterized in that** the reference axis (6) lies between the longitudinal axis (2a) of the crankshaft (2) and the at least one crankshaft throw (3).

10. Crank drive (1) according to any of the preceding claims, **characterized in that** for distance Δ: *0* < Δ ≤ *150 mm*.

11. Crank drive (1) according to any of the preceding claims, **characterized in that** for distance Δ: *0* < Δ *≤ 50 mm*.

12. Crank drive (1) according to any of the preceding claims, **characterized in that** for distance *Δ*: 50 *≤* Δ *≤ 100 mm.*

13. Crank drive (1) according to any of the preceding claims, **characterized in that** for distance *Δ*: 100 *≤* Δ ≤ *150 mm.*

14. Crank drive (1) according to any of the preceding claims, **characterized in that** for distance Δ: *3 ≤* Δ *≤ 15 mm*.

15. Crank drive (1) according to any of the preceding claims, **characterized in that** for distance Δ: 5 *≤* Δ *≤* 12 *mm*.

16. Method for production of the crankshaft (2) of a crank drive (1) according to any of the preceding claims, **characterized in that** the crankshaft (2) is forged together with the at least one compensation weight (4) arranged on the crankshaft (2).

## Revendications

1. Commande à manivelle (1) comprenant un vilebrequin (2) pour un moteur à combustion interne avec au moins un cylindre, dans lequel
- le vilebrequin (2) monté dans un carter de vilebrequin présente pour chaque cylindre un coude de vilebrequin correspondant (3), dans lequel les coudes de vilebrequin (3) sont disposés à distance l'un de l'autre le long de l'axe longitudinal (2a) du vilebrequin (2), et
**caractérisée en ce que**
- au moins un poids d'équilibrage (4) servant de balourd est disposé sur le vilebrequin (2) pour un équilibrage de masse sur le côté opposé d'au moins un coude de vilebrequin (3),
- ledit au moins un poids d'équilibrage (4) présente sur le côté tourné vers l'extérieur une forme en arc de cercle, dont le côté extérieur (4b) s'étendant en direction périphérique présente une distance S de grandeur constante par rapport à un axe de référence (6), qui est parallèle et est espacé d'une distante Δ par rapport à l'axe longitudinal (2a) du vilebrequin (2), dans lequel l'axe de référence (6) est disposé à partir de l'axe longitudinal (2a) du vilebrequin (2) sur le côté opposé au poids d'équilibrage (4).

2. Commande à manivelle (1) selon la revendication 1, **caractérisée en ce que** chaque piston (5) appartenant à un cylindre est relié de façon articulée au vilebrequin (2) au moyen d'une bielle, dans laquelle la bielle est reliée à une extrémité par un axe de piston au piston (5) et est montée à une autre extrémité de façon rotative sur un maneton (3b) du coude de vilebrequin correspondant (3) du vilebrequin (2).

3. Commande à manivelle (1) selon la revendication 2, **caractérisée en ce que** l'axe longitudinal (5a) dudit au moins un piston (5) coupe l'axe longitudinal (2a) du vilebrequin (2) .

4. Commande à manivelle (1) selon la revendication 3, **caractérisée en ce que** le plan défini par les deux axes longitudinaux (2a, 5a) forme, lorsque le piston (5) se trouve au point mort bas, le plan médian (4a) dudit au moins un poids d'équilibrage (4).

5. Commande à manivelle (1) selon une revendication 3 ou 4, **caractérisée en ce que** l'axe de référence (6) est situé dans le plan, que définissent l'axe longitudinal (5a) dudit au moins un piston (5) et l'axe longitudinal (2a) du vilebrequin (2).

6. Commande à manivelle (1) selon la revendication 2, **caractérisée en ce que** l'axe longitudinal (2a) du vilebrequin (2) s'étend à distance de l'axe longitudinal (5a) dudit au moins un piston (5).

7. Commande à manivelle (1) selon la revendication 6, **caractérisée en ce qu'**un plan passant par l'axe longitudinal (2a) du vilebrequin (2) et s'étendant parallèlement à l'axe longitudinal (5a) dudit au moins un piston (5) forme le plan médian (4a) dudit au moins un poids d'équilibrage (4).

8. Commande à manivelle (1) selon une revendication 6 ou 7, **caractérisée en ce que** l'axe de référence (6) se situe dans le plan, qui passe par l'axe longitudinal (2a) du vilebrequin (2) et qui s'étend parallèlement à l'axe longitudinal (5a) dudit au moins un piston (5).

9. Commande à manivelle (1) selon l'une quelconque des revendications précédentes, **caractérisée en ce que** l'axe de référence (6) est situé entre l'axe longitudinal (2a) du vilebrequin (2) et ledit au moins un coude de vilebrequin (3) .

10. Commande à manivelle (1) selon l'une quelconque des revendications précédentes, **caractérisée en ce que** pour la distance Δ on a: 0 < Δ ≤ 150 mm.

11. Commande à manivelle (1) selon l'une quelconque des revendications précédentes, **caractérisée en ce que** pour la distance Δ on a: 0 < Δ ≤ 50 mm.

12. Commande à manivelle (1) selon l'une quelconque des revendications précédentes, **caractérisée en ce que** pour la distance Δ on a: 50 ≤ Δ ≤ 100 mm.

13. Commande à manivelle (1) selon l'une quelconque des revendications précédentes, **caractérisée en ce que** pour la distance Δ on a: 100 ≤ Δ ≤ 150 mm.

14. Commande à manivelle (1) selon l'une quelconque des revendications précédentes, **caractérisée en ce que** pour la distance Δ on a: 3 ≤ Δ ≤ 15 mm.

15. Commande à manivelle (1) selon l'une quelconque des revendications précédentes, **caractérisée en ce que** pour la distance Δ on a: 5 ≤ Δ ≤ 12 mm.

16. Procédé de fabrication du vilebrequin (2) d'une commande à manivelle (1) selon l'une quelconque des revendications précédentes, **caractérisé en ce que** l'on forge le vilebrequin (2) d'une pièce avec ledit au moins un poids d'équilibrage (4) disposé sur le vilebrequin (2) .
